# EUROPEAN PATENT APPLICATION

(11) **EP 4 332 743 A1**
(43) Date of publication of application: **06.03.2024**
(21) Application number: 22794473.3
(22) Date of filing: 30.03.2022
(51) Int. Cl.: G06F 3/0484

(54) **CONTROL METHOD AND APPARATUS, COMPUTER-READABLE MEDIUM AND ELECTRONIC DEVICE**

(30) Priority: 28.04.2021 CN 202110467005
(71) Applicant: GUANGDONG OPPO MOBILE TELECOMMUNICATIONS CORP., LTD., Dongguan, Guangdong 523860 (CN)
(72) Inventor: ZHANG, Ping, Dongguan, Guangdong 523860 (CN)
(74) Representative: Ipside
(86) International application number: PCT/CN2022/083909
(87) International publication number: WO 2022/228000

(57) **Abstract**

A control method and apparatus, a computer-readable medium and an electronic device, which relate to the technical field of human-computer interaction. The control method includes: receiving a target control instruction (S610); and controlling a real-time motion state of a stretchable screen according to the target control instruction (S620). The present technical solution provides an interaction scheme for controlling a stretchable screen, can improve the precise control of a motion of the stretchable screen by a user, and can improve the interactivity between the user and the stretchable screen.

## Description

The present disclosure claims priority of China Patent Applicant No. 202110467005.5, filed on April 28th, 2021, in the title of "CONTROL METHOD AND APPARATUS, COMPUTER-READABLE MEDIUM AND ELECTRONIC DEVICE", the entire contents of which are hereby incorporated by reference in their entirety.

### TECHNICAL FIELD

The present disclosure relates to the field of human-computer interaction technologies, and in particular to a control method and an apparatus, a computer-readable medium, and an electronic device.

### BACKGROUND

Along with the continuous improvement of people's living standard, the screen of electronic device is getting more and more attention. In order to ensure that the display screen of the mobile terminal has a larger size, while ensuring that the mobile terminal has a smaller overall size, a flexible display screen is increasingly applied in the mobile terminal and adopted to make a retractable screen, for example: scroll screen, foldable screen, a movable screen that can be retracted back to the terminal shell, etc.

At present, in a related control scheme for a retractable screen, taking a scroll screen as an example, the flexible screen is fully extended and unfolded at a uniform speed according to a screen extension operation input by the user; the flexible screen is fully rolled up at a uniform speed according to a screen rollup operation input by the user. This control interaction is relatively single, with poor interactivity and low flexibility.

### SUMMARY OF THE DISCLOSURE

The objective of the present disclosure is to provide a control method, a control apparatus, a computer-readable medium, and an electronic device, which in turn improves, at least to a certain extent, the interactivity of a retractable screen and the flexibility of control of the retractable screen.

In a first aspect, provided is a control method, performed by an electronic device arranged with a retractable screen, and including: receiving a target control instruction; and controlling a real-time motion state of the retractable screen according to the target control instruction.

In a second aspect, provided is a control apparatus, configured for an electronic device arranged with a retractable screen, and including: a control instruction receiving module, configured to receive a target control instruction; and a motion state control module, configured to control a real-time motion state of the retractable screen according to the target control instruction.

In a third aspect, provided is a computer-readable storage medium, storing a computer program; wherein when the computer program is executed by a processor, the processor is caused to perform the method as above.

In a fourth aspect, provided is an electronic device, including: a processor; and a memory, configured to store an executable instruction of the processor; wherein the processor is configured to perform the method as above by executing the executable instruction.

### BRIEF DESCRIPTION OF THE DRAWINGS

The accompanying drawings herein are incorporated into and form a part of the specification, illustrate embodiments consistent with the present disclosure, and are used in conjunction with the specification to explain the principles of the present disclosure. Obviously, the accompanying drawings in the following description are only some of the embodiments of the present disclosure, and other accompanying drawings may be obtained from these drawings without creative labor for those skilled in the art.
FIG. 1 is a structural schematic view of an electronic device in a retracted state according to an embodiment of the present disclosure.
FIG. 2 is a structural schematic view of an electronic device in an unfolded state according to an embodiment of the present disclosure.
FIG. 3 is an exploded structural schematic view of an electronic device according to an embodiment of the present disclosure.
FIG. 4 is a cross-sectional structural schematic view of an electronic device in a retracted state according to an embodiment of the present disclosure.
FIG. 5 is a cross-sectional structural schematic view of an electronic device in an unfolded state according to an embodiment of the present disclosure.
FIG. 6 is a flowchart of a control method according to an embodiment of the present disclosure.
FIG. 7 is a flowchart of generating a target control instruction through a monitored touch event according to an embodiment of the present disclosure.
FIG. 8 is a flowchart of determining a motion attribute control instruction according to a sliding event according to an embodiment of the present disclosure.
FIG. 9 is a flowchart of controlling a retractable screen through a touch apparatus according to an embodiment of the present disclosure.
FIG. 10 is a flowchart of realizing motion control of a retractable screen through a sliding operation according to an embodiment of the present disclosure.
FIG. 11 is a flowchart of generating a target control instruction through a monitored tilt event according to an embodiment of the present disclosure.
FIG. 12 is a flowchart of determining a motion speed of a retractable screen according to a tilt event according to an embodiment of the present disclosure.
FIG. 13 is a flowchart of realizing motion control of a retractable screen through a tilt operation according to an embodiment of the present disclosure.
FIG. 14 is a flowchart of generating a target control instruction through a touch operation obtained in a touch region according to an embodiment of the present disclosure.
FIG. 15 is a flowchart of generating a target control instruction through a touch operation obtained in a touch region according to another embodiment of the present disclosure.
FIG. 16 is a flowchart of realizing motion control of a retractable screen through a touch operation according to an embodiment of the present disclosure.
FIG. 17 is a flowchart of generating a target control instruction based on a voice instruction according to an embodiment of the present disclosure.
FIG. 18 is a flowchart of realizing motion control of a retractable screen through a voice instruction according to an embodiment of the present disclosure.
FIG. 19 is a schematic view of a composition of a control apparatus according to an embodiment of the present disclosure.

### DETAILED DESCRIPTION

Embodiments will be described more fully with reference to the accompanying drawings. However, the embodiments can be implemented in a variety of forms and should not be construed as being limited to the examples set forth herein; rather, the provision of these embodiments allows for the present disclosure to be more comprehensive and complete and conveys the idea of the embodiments in a comprehensive manner to those skilled in the art. The features, structures, or characteristics described may be combined in one or more embodiments in any suitable manner.

In addition, the accompanying drawings are only schematic illustrations of the present disclosure and are not necessarily to scale. Identical reference numerals in the drawings indicate identical or similar portions, and thus repeated descriptions of them will be omitted. Some of the block diagrams shown in the accompanying drawings are functional entities that do not necessarily have to correspond to physically or logically separate entities. These functional entities may be implemented in software form, or in one or more hardware modules or integrated circuits, or in different networks and/or processor devices and/or microcontroller devices.

Exemplary embodiments of the present disclosure provide an electronic device for implementing a control method, which may be arranged with a retractable screen. For example, the electronic device may be a smartphone, a tablet computer, etc. The electronic device includes at least a processor and a memory, the memory configured to store instructions executable by the processor, and the processor configured to perform the control method by executing the instructions.

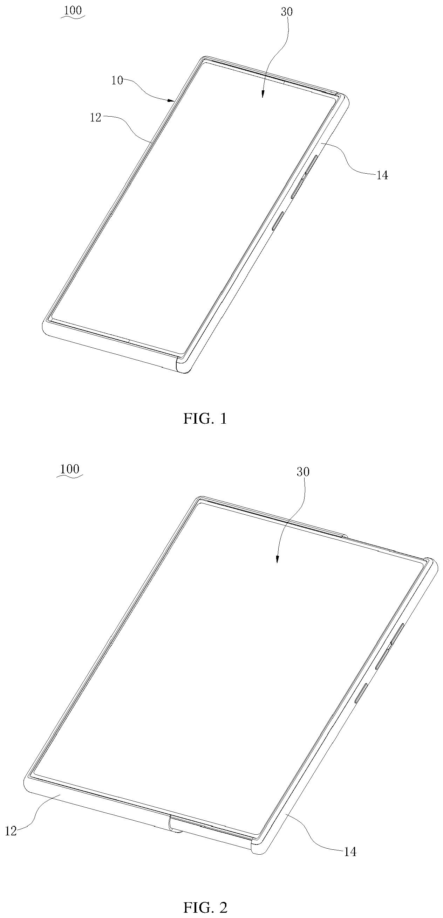

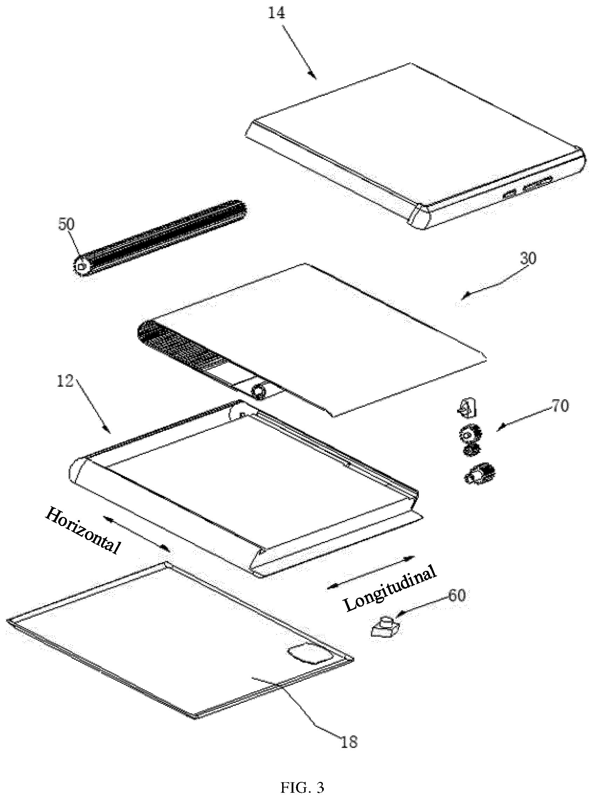

The following is an exemplary description of the construction of the electronic device, taking an electronic device 100 illustrated in FIGS. 1 to 5 as an example. It should be appreciated by those skilled in the art that the construction of the electronic device 100 is also capable of being applied to stationary types of devices, in addition to components specifically intended for mobile purposes. In alternative embodiments, the electronic device 100 may include more or fewer components than illustrated, or a combination of certain components, or a splitting of certain components, or a different arrangement of components. The illustrated components may be implemented as hardware, software, or a combination of software and hardware. The connection relationship between the components is only schematically shown and does not constitute a structural limitation of the electronic device 100.

Combining FIGS. 1 to 3, the electronic device 100 includes a housing assembly 10, a flexible display 30, a transmission member 50, and a driving mechanism 70. The housing assembly 10 is of a hollow structure; components such as the transmission member 50, the driving mechanism 70, and a camera 90 may be disposed in the housing assembly 10. It can be appreciated that the electronic device 100 includes, but is not limited to, a mobile phone, a tablet, and other mobile terminals or other portable electronic devices. In the present disclosure, the electronic device 100 is illustrated taking a mobile phone as an example.

In the present embodiments, the housing assembly 10 includes a first housing 12 and a second housing 14 that are movable relative to each other. Specifically, in some embodiments, the first housing 12 and the second housing 14 are slidably connected, that is, the second housing 14 is slidable relative to the first housing 12.

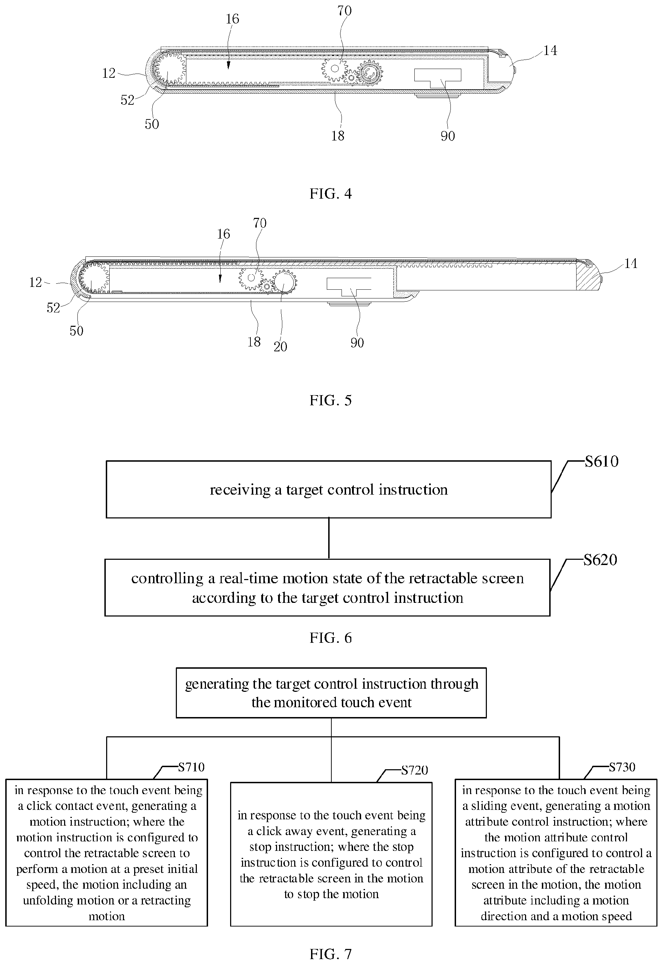

Specifically, referring to FIGS. 4 and 5, the first housing 12 and the second housing 14 together define a holding space 16. The holding space 16 may be configured to hold components such as the transmission member 50, the camera 60, and the driving mechanism 70. The housing assembly 10 may further include a back cover 18, which cooperates with the first housing 12 and the second housing 14 to define the holding space 16.

The transmission member 50 is disposed on the second housing 14; an end of the flexible display 30 is disposed on the first housing 12, the flexible display 30 extends around the transmission member 50, and the other end of the flexible display is disposed in the holding space 16, so as to make a portion of the flexible display hidden in the holding space 16. The portion of the flexible display 30 hidden in the holding space 16 may not be illuminated. When the first housing 12 and the second housing 14 move relatively far away from each other, the flexible display 30 can be driven to be unfolded by the transmission member 50, such that a larger portion of the flexible display 30 is exposed to the holding space 16. The portion of the flexible display 30 exposed outside the holding space 16 is illuminated to make a display region presented by the electronic device 100 larger.

The transmission member 50 may be a spindle structure with teeth 52 on an outside thereof, and the flexible display 30 is mated with the transmission member 50 by engaging or the like, such that when the first housing 12 and the second housing 14 move relatively far away from each other, a portion of the flexible display 30 engaged on the transmission member 50 is driven to move and unfold by the transmission member 50.

It is to be understood that the transmission member 50 may alternatively be a circular shaft without the teeth 52. When the first housing 12 and the second housing 14 move relatively far away from each other, a portion of the flexible display 30 wound on the transmission member 50 is unfolded by the transmission member 50, such that a larger portion of the flexible display 30 is exposed to the holding space 16 to be in an unfolded state. Specifically, the transmission member 50 may be rotatably disposed on the second housing 14, and the transmission member 50 is rotatable with the motion of the flexible display 30 as the flexible display 30 is gradually unfolded. In other embodiments, the transmission member 50 may be fixed to the second housing 14 and have a smooth surface. The transmission member 50 is in slidable contact with the flexible display 30 through the smooth surface when the flexible display 30 is being unfolded.

When the first housing 12 and the second housing 14 move relatively toward each other, the flexible display may be retracted driven by the transmission member 50. Alternatively, the electronic device 100 further includes a reset member (not shown), and the end of the flexible display disposed in the holding space 16 is mated with the reset member; the reset member drives the flexible display 30 to be reset when the first housing 12 and the second housing 14 move relatively toward each other, which in turn causes a portion of the flexible display to be retracted in the holding space 16.

In the embodiments, the driving mechanism 70 may be disposed in the holding space 16, and the driving mechanism 70 may be mated with the second housing 14. The driving mechanism 70 is configured to drive for realizing a relative separation motion between the second housing 14 and the first housing 12, thereby driving the flexible display assembly 30 to be unfolded. It is understood that the driving mechanism 70 may be omitted, and the user may directly make the first housing and the second housing move relative to each other, e.g., manually.

In related technical solutions, the unfolding or retraction of the retractable screen is generally realized through simple control; for example, in a case where the unfolding or retraction is controlled through a physical button or a virtual button, the physical button or virtual button is pressed and the retractable screen will be fully unfolded, and the physical button or virtual button is pressed again and the retractable screen will be fully retracted; for another example, the unfolding or retraction is generally through a power on or power off instruction. However, in such control schemes, the interactivity between the user and the retractable screen is poor, resulting in a single control mode of the retractable screen; in addition, fully unfolding or retracting the retractable screen results in a single display mode of the retractable screen, which lacks flexibility.

Based on one or more of the problems in the related art, the present embodiments provide a control method that can be applied in the electronic device 100 illustrated in FIGS. 1 to 5, and the control method is specifically described below.

FIG. 6 is a flowchart of a control method according to an embodiment of the present disclosure. The control method includes the following operations at block S610 and S620.

At block S610: receiving a target control instruction.

In some embodiments, the target control instruction refers to an instruction input by the user in different ways for controlling the retractable screen of the electronic device to perform an unfolding or retracting motion. For example, the target control instruction may be a control instruction obtained and converted by a touch input by the user through a touchpad arranged on the electronic device, or a control instruction obtained and converted by a tilt operation input by the user through a gravity sensing device arranged on the electronic device, or a control instruction obtained and converted by a voice instruction input through a voice assistant application provided by the electronic device. The present embodiments do not make any special limitation in this regard.

At block S620: controlling a real-time motion state of the retractable screen according to the target control instruction.

In some embodiments, the real-time motion state refers to any state associated with the motion of the retractable screen. For example, the real-time motion state may be an unfolding (unfolded) state or a retracting (retracted) state, a uniform-speed motion state, an accelerated motion state, etc., and the present embodiments do not make any special limitations in this regard. For example, through an input touch operation through a touchpad arranged on the electronic device, assuming that the touch operation is a click operation where the user's finger contacts the touch panel, in which case the retractable screen may be controlled to unfold at a preset speed; then, based on the clicked touch point sliding rightward for a certain distance, the retractable screen may be controlled to accelerate and unfold rightward through the sliding speed of the sliding operation (assuming that the retractable screen of the electronic device unfolds rightward and retracts to the left), and then when the sliding operation stops but does not end (i.e., it is not sliding and the finger), the retractable screen may be controlled to continue to unfold uniformly at the motion speed when the sliding operation ends until the retractable screen is fully unfolded. After the above, the process of converting the input touch operation into the target control instruction to control the real-time motion state of the retractable screen is realized. Of course, the above is merely a schematic illustrative example and should not cause any special limitation to the embodiments.

Step S610 and step S620 are described in detail below.

### Embodiment 1

In some embodiments, the electronic device may include a touch apparatus, which may be a small touchpad or a capacitive touch button, and the present embodiments do not impose any special limitation thereon. The touch apparatus may be arranged on a back side of the electronic device, such as may be arranged on a side of the first housing 12 and/or the second housing 14 away from the flexible display 30, or may be arranged on a side edge of the first housing 12 and/or the second housing 14, and the embodiments do not specifically limit the location of the touch apparatus. The touchpad or capacitive touch button arranged on the back side or side edge of the first housing and/or the second housing may facilitate the user to execute a touch event, so as to enable the user to operate with one hand when using the electronic device including the retractable screen, thereby enhancing the operation efficiency.

Specifically, the touch event may be monitored by the touch apparatus provided by the electronic device, and the target control instruction may be generated based on the monitored touch event.

The touch event refers to a touch operation of the user received by the electronic device through the touch apparatus, for example, the touch event may be a click contact event (i.e., an event in which the user contacts the touch apparatus through a finger but does not generate a relative slide), a click away event (i.e., an event in which the user removes a finger from the touch apparatus, which may also be understood as the end of the click contact event), or a sliding event (i.e., an event in which the user contacts the touch apparatus by a finger and generates a relative slide), and the present embodiments are not limited thereto.

Specifically, referring to FIG. 7, the target control instruction may be generated by the monitored touch event, which may specifically be implemented by the following.

At block S710: in response to the touch event being a click contact event, generating a motion instruction; where the motion instruction is configured to control the retractable screen to perform a motion at a preset initial speed, the motion including an unfolding motion or a retracting motion.

The preset initial speed refers to a pre-set default speed of the retractable screen without interference from other control instructions. For example, the preset initial speed may be 1 cm/s or 0.5 cm/s, and the specific preset initial speed may be customized according to actual situation, without any limitation thereto.

The unfolding motion refers to a motion process in which the transmission member drives a portion of the retractable screen that is in the holding space to move out of the holding space, and conversely, the retracting motion refers to a motion process in which the transmission member drives a portion of the retractable screen that is outside the holding space to move into the holding space. When the touch event is a click contact event, it may be considered that the user expects to unfold or retract the retractable screen, and therefore a motion instruction can be generated and sent to a control module of the transmission member, for controlling the transmission member to drive the retractable screen to perform the unfolding motion or the retracting motion at the preset initial speed.

Of course, in some embodiments, when the touch event is a click contact event, a motion instruction is generated, and the motion instruction can control energization of the transmission member, such that the transmission member is only energized when the user clicks on the touch apparatus, so as to be able to respond in time to a new instruction when the new instruction is received at a next moment, thereby improving the response speed of the unfolding motion or the retracting motion of the retractable screen.

At block S720: in response to the touch event being a click away event, generating a stop instruction; where the stop instruction is configured to control the retractable screen in the motion to stop the motion.

When the touch event is a click away event, it may be considered that the user expects to end the control of the retractable screen, and therefore a stop instruction can be generated and sent to the control module of the transmission member, so as to control the transmission member to stop running or to carry out a power-off processing on the transmission member, thereby realizing the stopping of the unfolding motion or the retracting motion of the retractable screen.

At block S730: in response to the touch event being a sliding event, generating a motion attribute control instruction; where the motion attribute control instruction is configured to control a motion attribute of the retractable screen in the motion, the motion attribute including a motion direction and a motion speed.

The motion attribute refers to an attribute of the retractable screen during the motion process, for example, the motion attribute may include the motion direction of the retractable screen (e.g., a horizontal motion direction of the retractable screen may be leftward or rightward, and a longitudinal motion direction of the retractable screen may be upward or downward, which is of course only an illustrative example without limitations thereto), and the motion speed of the retractable screen.

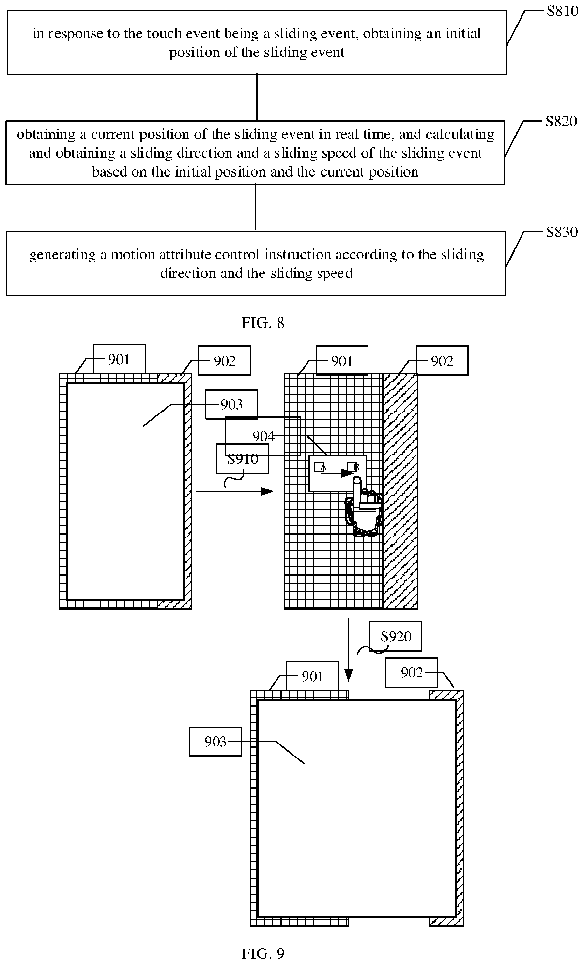

In some embodiments, referring to FIG. 8, the sliding event may be converted into a motion attribute control instruction, which may specifically be implemented by the following.

At block S810: in response to the touch event being a sliding event, obtaining an initial position of the sliding event.

At block S820: obtaining a current position of the sliding event in real time, and calculating and obtaining a sliding direction and a sliding speed of the sliding event based on the initial position and the current position.

At block S830: generating a motion attribute control instruction according to the sliding direction and the sliding speed.

The initial position refers to position coordinates corresponding to a starting point of the sliding event, the system may be caused to detect the sliding event on the touch apparatus at a fixed frequency (e.g., 100Hz). When the user-input sliding event is detected to be started, the position coordinates of the sliding event on the touch apparatus are recorded, and the position coordinates are taken as the initial position. Then the sliding event on the touch apparatus is continued to be detected at a fixed frequency (e.g., 100Hz), and the current position of the sliding event is determined in real time, i.e., the position coordinates of the user's finger on the touch apparatus at a current moment.

The motion direction of the retractable screen can be determined by the sliding direction of the sliding event, and the motion speed of the retractable screen can be calculated and determined by the sliding speed of the sliding event at a preset ratio.

For example, a coordinate system is established on the touch apparatus, assuming that the initial position of the sliding event is captured as (1, 1), and after 1 second, the current position of the sliding event is (3, 1), in which case it can be determined that a difference of horizontal coordinate between the current position and the initial position is positive. Therefore, it may be considered that the sliding direction of the sliding event is rightward, and further it can be determined that the motion direction of the retractable screen is rightward. Then, the motion attribute control instruction is generated for controlling the transmission member to rotate clockwise, where when the rotating clockwise, the transmission member can control the rightward motion of the retractable screen. Calculation may be performed according to the initial position and the coordinate change of the current position to obtain the sliding speed of the sliding event, e.g., 2mm/s, when the preset ratio is 10, the motion speed of the retractable screen can thus be obtained as 20mm/s. Then, the motion attribute control instruction is generated for controlling the rotational speed of the transmission member, such as the rotational speed of the transmission member is 1000r/min corresponding to the motion speed of 20mm/s, so as to realize the control on the motion speed of the retractable screen. Of course, the above is only a schematic illustration, and the present embodiments are not limited thereto.

In the embodiments, when the sliding event stops sliding and does not end, a uniform-speed motion instruction may be generated, and the uniform-speed motion instruction is configured to control the retractable screen in motion to move at a uniform speed at the current speed. For example, when the user slides on the touch apparatus through a finger for a certain while and then stops sliding at a certain moment, but the finger still touches the touch apparatus and does not leave, the sliding event may be considered to have stopped sliding and has not ended. The current speed refers to the instantaneous speed of the retractable screen at the instantaneous moment when the sliding event stops sliding. For example, assuming that the initial position of the sliding event is captured as (1, 1), and after 1 second, the current position of the sliding event is (3, 1), in which case the motion direction of the retractable screen is rightward and the motion speed is 20mm/s, when the sliding event stops sliding at the position of (3, 1) and does not end, the retractable screen continues to move in the motion direction of rightward and continues to move at a uniform speed with the instantaneous speed of 20 mm/s at the current position.

FIG. 9 is a flowchart of controlling a retractable screen through a touch apparatus according to an embodiment of the present disclosure.

Referring to FIG. 9, the electronic device may include a fixed end 901, a movable end 902, a retractable screen 903, and a touch apparatus 904 arranged on a back side of the housing of the fixed end 901. Of course, the shape and setting position of the touch apparatus 904 are only schematic, and those skilled in the art is prone to think of arranging the touch apparatus 904 at a side edge of the housing on the fixed end 901 or the movable end 902, which should not cause any special limitation to the embodiments of the present disclosure.

In step S910, the electronic device may monitor a touch event at a fixed frequency by the touch apparatus 904; in step S920, when the touch event is detected as a sliding event, a motion attribute control instruction may be generated according to the sliding event. For example, the sliding event is a slide from point A (1, 1) on the touch apparatus to point B (3, 1) within 1 s, in which case the point A may be taken as the initial position of the slide event, and the point B may be taken as the current position of the sliding event. In this case, it can be determined that the difference between the horizontal coordinates of the current position and the initial position is a positive value. Therefore, it may be considered that the sliding direction of the sliding event is rightward, and thus it can be determined that the motion direction of the retractable screen is rightward. Calculation may be performed according to the initial position and the coordinate change of the current position to obtain the sliding speed of the sliding event, e.g., 2mm/s, when the preset ratio is 10, the motion speed of the retractable screen can thus be obtained as 20mm/s. Then, the motion attribute control instruction is generated for controlling the rotational speed of the transmission member, such as the rotational speed of the transmission member is 1000r/min corresponding to the motion speed of 20mm/s, so as to realize the control on the motion speed of the retractable screen. Of course, the above is only a schematic illustration, and the present embodiments are not limited thereto.

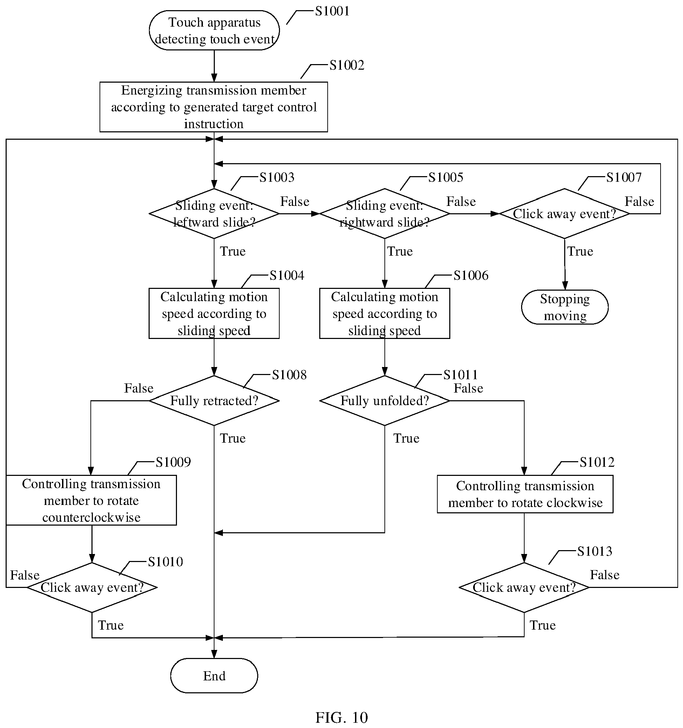

FIG. 10 is a flowchart of realizing motion control of a retractable screen through a sliding operation according to an embodiment of the present disclosure.

Referring to FIG. 10, step S1001: a touch event is monitored at a fixed frequency (e.g., 100 Hz) by a touch apparatus, and when the touch apparatus detects the touch event, subsequent processes are executed.

Step S1002: generating a target control instruction through the touch event, sending the target control instruction to a control module corresponding to the transmission member (e.g., a stepping motor engaged with the retractable screen), and energizing the transmission member according to the target control instruction.

Step S1003: when the touch event is detected as a sliding event, determining whether the sliding event is a leftward sliding operation event; when the sliding event is a leftward sliding operation event, executing step S 1004; the sliding event is not a leftward sliding operation event, executing step S1005.

Step S1004: obtaining a sliding speed corresponding to the leftward sliding operation event, and calculating and obtaining a motion speed according to the sliding speed, for controlling the retracting motion of the retractable screen according to the motion speed, and executing step S1008.

Step S1005: when the touch event is detected as a sliding event, determining whether the sliding event is a rightward sliding operation event; when the sliding event is a rightward sliding operation event, executing step S1006; when the sliding event is not a rightward sliding operation event, executing step S1007.

Step S 1006: obtaining a sliding speed corresponding to the rightward sliding operation event, and calculating and obtaining a motion speed according to the sliding speed, for controlling the unfolding motion of the retractable screen according to the motion speed, and executing step S1011.

Step S1007: determining whether the touch event is a click away event (i.e., an event in which a finger is lifted from the touch apparatus); when the touch event is a click away event, controlling the movable retractable screen in motion to stop the motion; when the touch event is not a click away event, returning to execute step S1003.

Step S 1008: determining whether the retractable screen is fully retracted; when the retractable screen is fully retracted, ending the current process; when the retractable screen is not fully retracted, executing step S1009.

Step S1009: continuing to control the transmission member to rotate counterclockwise to realize the retracting motion of the retractable screen.

Step S1010: determining whether the touch event is a click away event (i.e., an event in which a finger is lifted from the touch apparatus); when the touch event is a click away event, ending the current process; when the touch event is not a click away event, returning to execute step S1003.

Step S1011: determining whether the retractable screen is fully unfolded; when the retractable screen is fully unfolded, ending the current process; when the retractable screen is not fully unfolded, executing step S1012.

Step S1012: continuing to control the transmission member to rotate clockwise to realize the unfolding motion of the retractable screen.

Step S1013: determining whether the touch event is a click away event (i.e., an event in which a finger is lifted from the touch apparatus); when the touch event is a click away event, ending the current process; when the touch event is not a click away event, returning to execute step S1003.

### Embodiment 2

In some embodiments, the electronic device may include an angular motion detection apparatus for realizing a gravity sensing function, capable of detecting a user-input tilt operation and receiving a target control instruction. The angular motion detection apparatus may be a gyroscope apparatus or an acceleration detection apparatus, and the present embodiments do not make any special limitations thereon. The angular motion detection apparatus may be arranged in the electronic device, or may be connected externally through a wired connection or a wireless connection with the electronic device, and the present embodiments do not make any special limitations thereon.

Specifically, a tilt event may be monitored through the angular motion detection apparatus, and the target control instruction may be generated according to the tilt event.

The tilt event refers to an event in which the electronic device detects, through the angular motion detection device, an operation of the user tilting the electronic device. For example, the tilt event may be a leftward tilt event (i.e., an operation in which the user raises a right end of the horizontally placed electronic device to form a certain angle between the electronic device and the horizontal plane), or a rightward tilt event (i.e., an operation in which the user raises a left end of the horizontally placed electronic device to form a certain angle between the electronic device and the horizontal plane).

In the embodiments, the electronic device may include a fixed end and a movable end, e.g., the fixed end may be an end corresponding to the first housing 12 in FIG. 1, and the movable end may be an end corresponding to the second housing 12 in FIG. 1.

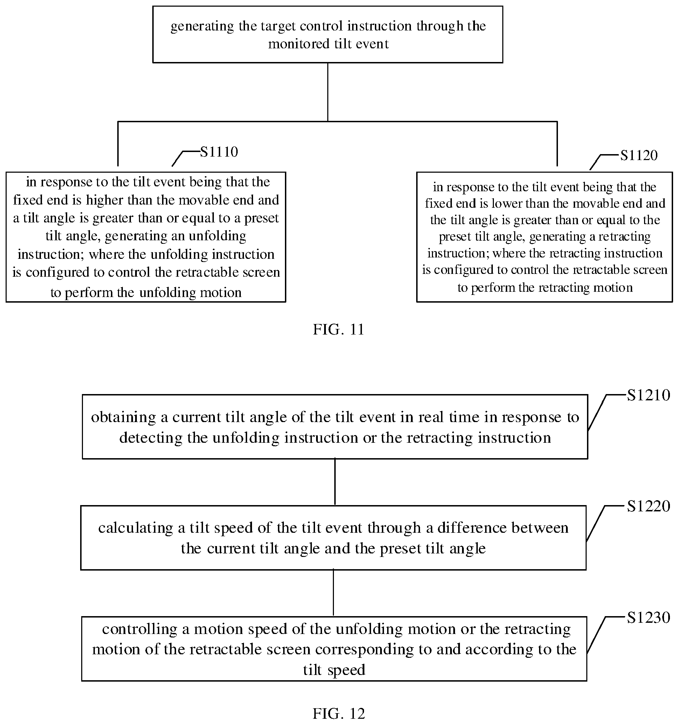

Specifically, referring to FIG. 11, the target control instruction may be generated by the monitored tilt event, which may specifically be implemented by the following.

At block S1110: in response to the tilt event being that the fixed end is higher than the movable end and a tilt angle is greater than or equal to a preset tilt angle, generating an unfolding instruction; where the unfolding instruction is configured to control the retractable screen to perform the unfolding motion.

The preset tilt angle refers to a preset angle for triggering the generation of the target control instruction. For example, the preset tilt angle may be 20°. In a case where the horizontal height of the fixed end of the electronic device is greater than the horizontal height of the movable end of the electronic device, and the formed tilt angle is 30°, the tilt angle is greater than or equal to 20°, it may be considered that the user expects to unfold the retractable screen (similar to "tipping" the retractable screen from the fixed end or the first housing). Therefore, an unfolding instruction can be generated and sent to the control module of the transmission member to control the transmission member to drive the retractable screen to perform the unfolding motion. Of course, the preset tilt angle may be customized according to actual situations, and the embodiments do not make any special limitations in this regard.

At block S1120: in response to the tilt event being that the fixed end is lower than the movable end and the tilt angle is greater than or equal to the preset tilt angle, generating a retracting instruction; where the retracting instruction is configured to control the retractable screen to perform the retracting motion.

For example, the preset tilt angle may be 20°. In a case where the horizontal height of the fixed end of the electronic device is less than the horizontal height of the movable end, and the formed tilt angle is 30°, the tilt angle is greater than or equal to 20°, it may be considered that the user expects to retract the retractable screen (similarly to "reversing" the retractable screen back to the fixed end or the first housing). Therefore, a retracting instruction can be generated and sent to the control module of the transmission member to control the transmission member to drive the retractable screen to perform the retracting motion.

In some embodiments, referring to FIG. 12, the tilt event is converted into the target control instruction to control the real-time motion state of the retractable screen, which may be implemented by the following.

At block S1210: obtaining a current tilt angle of the tilt event in real time in response to detecting the unfolding instruction or the retracting instruction.

At block S1220: calculating a tilt speed of the tilt event through a difference between the current tilt angle and the preset tilt angle.

At block S1230: controlling a motion speed of the unfolding motion or the retracting motion of the retractable screen corresponding to and according to the tilt speed.

The current tilt angle refers to a tilt angle corresponding to the current moment of the tilt event in a process of tilting the electronic device. Since the unfolding or retracting instruction is generated only when the tilt angle is greater than or equal to the preset tilt angle, the preset tilt angle may be taken as the initial tilt angle of the tilt event.

For example, assuming that the preset tilt angle is 20°, when the tilt angle between the electronic device and the horizontal plane is greater than or equal to 20°, tilt parameters of the tilt event are started to be collected. It is detected that the tilt angle between the electronic device and the horizontal plane is 30° after 1 s, in which case the tilt speed of the tilt event can be calculated and obtained according to the difference between the current tilt angle and the preset tilt angle to be 10°/s, with a value of 10. Then the motion speed of the unfolding motion or the retracting motion corresponding to the retractable screen is calculated to be 20 mm/s through a preset rate such as 2 mm/s. Of course, the above is only a schematic illustration, and the present embodiment is not limited thereto.

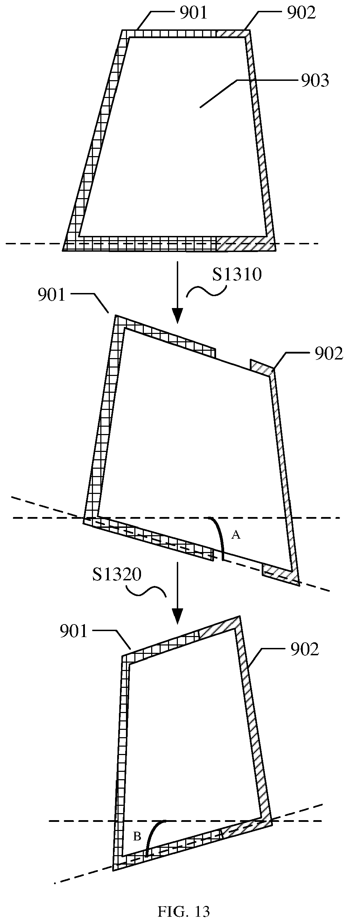

FIG. 13 is a flowchart of realizing motion control of a retractable screen through a tilt operation according to an embodiment of the present disclosure.

Referring to FIG. 13, the electronic device may include a fixed end 901, a movable end 902, a retractable screen 903, and an angular motion detection apparatus that is disposed in or wired or wirelessly connected to the electronic device.

In step S1310, a tilt event input by the user can be detected through the angular motion detection apparatus; when the tilt event is that the fixed end 901 is higher than the movable end 902 such that the horizontally placed electronic device deviates from the horizontal plane (i.e., a rightward tilt event), and the tilt angle A formed by the electronic device and the horizontal plane is greater than or equal to the preset tilt angle (e.g., a preset tilt angle of 20°), the unfolding instruction is generated to control the retracted retractable screen to perform the unfolding motion through the unfolding instruction, thereby realizing an interaction method of "tipping" the retractable screen from the holding space at the fixed end.

In step S1320, a tilt event input by the user can be detected through the angular motion detection apparatus; when the tilt event is that the fixed end 901 is lower than the movable end 902 such that the horizontally placed electronic device deviates from the horizontal plane (i.e., a leftward tilt event), and the tilt angle B formed by the electronic device and the horizontal plane is greater than or equal to the preset tilt angle, the retracting instruction is generated to control the unfolded retractable screen to perform the retracting motion, thereby realizing an interaction method of "reversing" the retractable screen back to the fixed end of the holding space.

### Embodiment 3

In some embodiments, the retractable screen may include a visible region and a hidden region, where the visible region is a screen region of the retractable screen being outside the holding space of the first housing, and the hidden region is a screen region of the retractable screen being contained within the holding space of the first housing.

Specifically, a touch region may be provided at a preset position of the visible region, and the target control instruction may be generated according to a touch operation acted on the touch region. For example, the touch region may be arranged at a position at the movable end and near an edge of the second housing, the touch operation input by the user may be received through the touch region, and the target control instruction may be generated for controlling the real-time motion state of the retractable screen through the touch operation.

In the embodiments, the touch region may include a slide rail and a slider on the slide rail, which serves as virtual controls to enable the user to intuitively operate the degree of unfolding or retraction of the retractable screen and the motion speed of the unfolding or retraction.

Specifically, when the touch operation drags the slider to generate a displacement on the slide rail, a motion attribute control instruction is generated according to a displacement attribute of the slider, and the motion attribute control instruction is configured to control the motion attribute of the retractable screen. The motion attribute may include the motion direction and the motion speed.

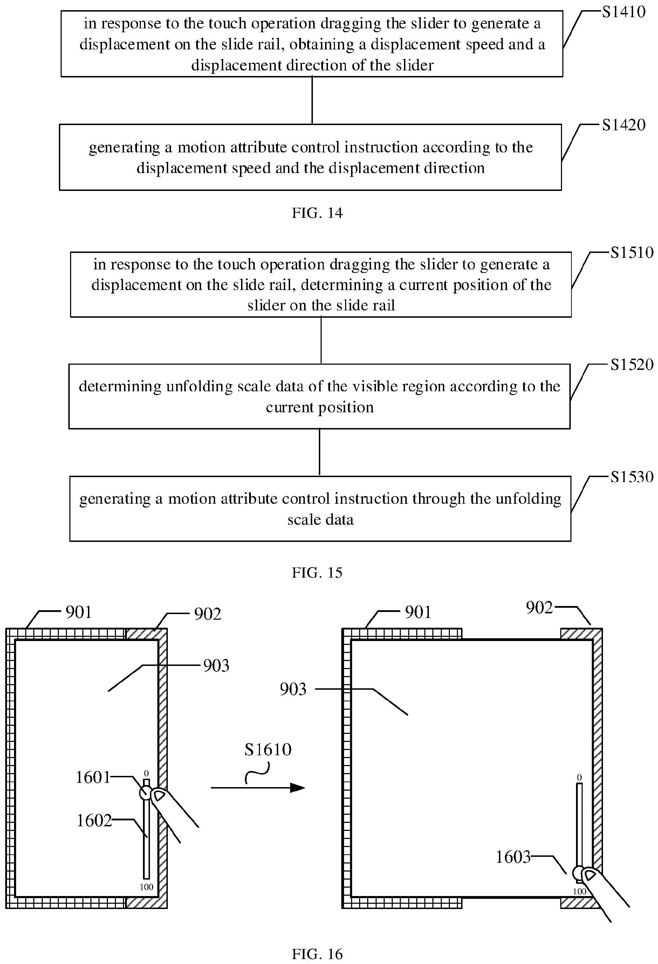

Further, referring to FIG. 14, the touch operation detected in the touch region may be converted into the motion attribute control instruction, which may be implemented by the following.

At block S1410: in response to the touch operation dragging the slider to generate a displacement on the slide rail, obtaining a displacement speed and a displacement direction of the slider.

At block S1420: generating a motion attribute control instruction according to the displacement speed and the displacement direction.

The displacement speed of the slider refers to a speed at which the user-input touch operation drags the slider to move, and the displacement direction of the slider refers to a specific direction at which the user-input touch operation drags the slider to move on the slide rail. For example, the slide rail may be arranged horizontally or vertically, which can be customized by the user specifically. Assuming that the slide rail is arranged vertically, the slider can move up and down on the slide rail. The displacement speed of the slider may be detected to be such as 2mm/s and converted into the motion speed of the retractable screen of such as 20mm/s according to a preset ratio (e.g., 10); when the slider is detected to slide downward (in a case where the slide rail is arranged horizontally, the determination condition herein may be that the slider slides rightward), it may be determined that the motion direction of the retractable screen is rightward, and the slider is detected to slide upward (in the case where the slide rail is arranged horizontally, the determination condition herein may be that the slider slides leftward), it may be determined that the motion direction of the retractable screen is leftward. Of course, the above is only a schematic illustration, and the touch region in the embodiments may be realized in other ways. However, either realization has the same basic principle, and therefore, it will not be repeated herein.

In other embodiments, referring to FIG. 15, the touch operation detected in the touch region may be converted into the motion attribute control instruction, which may be implemented by the following.

At block S1510: in response to the touch operation dragging the slider to generate a displacement on the slide rail, determining a current position of the slider on the slide rail.

At block S1520: determining unfolding scale data of the visible region according to the current position.

At block S1530: generating a motion attribute control instruction through the unfolding scale data.

The current position may refer to coordinates at which the slider is located on the slide rail. For example, the slide rail may be divided into 100 scales, and in a case where the slide rail is arranged vertically, the upper end may be set as 0 scale and the lower end as 100 scale. When the slider is dragged to 50 scales of the slide rail, it may be considered that the 50 scales is the current position of the slider. Of course, the current position of the slider on the slide rail may be expressed in other ways, without limitations herein.

The unfolding scale data refers to a proportion of the visible region of the retractable screen that occupies the global region of the retractable screen. For example, when the slide rail is divided into 100 scales, the slider may not be required to continuously slide on the slide rail but can be jumped in the form of a direct tap to a corresponding position. Assuming that the current position of the slider is 50 scales, it can be determined that the unfolding scale data of the visible region may be 50%, and the retractable screen may be controlled to unfold or retract according to a preset motion speed such that the unfolding scale data of the visible region is 50%, and the motion direction may be determined according to the initial position and the current position of the slider. Specific implementation of the above may refer to the aforementioned determination method, and will not be repeated herein.

FIG. 16 is a flowchart of realizing motion control of a retractable screen through a touch operation according to an embodiment of the present disclosure.

Referring to FIG. 16, the electronic device may include a fixed end 901, a movable end 902, a retractable screen 903, and a touch region arranged in a visible region of the retractable screen 903. The touch region may include a slider 1601, and a slide rail 1602 that restricts a motion trajectory of the slider 1601.

In step S1610, a user-input touch operation 1603 may be obtained through the touch region. When the touch operation 1603 drags the slider 1601 to generate a displacement on the slide rail 1602, the displacement speed and displacement direction of the slider 1601 may be obtained, and the motion direction and motion speed of the unfolding or retracting motion of the retractable screen may be controlled according to the displacement speed and displacement direction. Of course, in other embodiments, when the slide rail is divided into 100 scales, the slider may not be required to continuously slide on the slide rail but can be jumped in the form of a direct tap to a corresponding position. Assuming that the current position of the slider is 100 scales, it can be determined that the unfolding scale data of the visible region may be 100%, and the retractable screen may be controlled to unfold according to a preset motion speed such that the unfolding scale data of the visible region is 100%, and the motion direction may be determined according to the initial position and the current position of the slider.

### Embodiment 4

In some embodiments, the target control instruction may be generated based on a voice instruction when the voice instruction is detected to contain a control intent of the retractable screen, by monitoring the voice instruction sent by a wearable device in communication connection.

The communication connection refers to a communication method that connects the wearable device with the electronic device and carries out data transmission. For example, the communication connection may be a Bluetooth communication connection, a Wi-Fi communication connection, a communication connection based on a 2G/3G/4G/5G mobile network, and of course other communication methods capable of realizing the connection between a first terminal device and a second terminal device and carrying out data transmission. The communication connection may also be a communication method for wired connection by supporting interface protocols such as Micro-USB, Type-C, Thunderbolt 3, etc., to which the present embodiments do not make any special limitation. The wearable device may be a portable electronic device such as a smart watch, smart glasses, etc., and the present embodiments are not limited thereto.

The control intent refers to a type of intent for controlling the real-time motion state of the retractable screen that is recognized from the voice instruction by natural language understanding (NLU) technology. For example, for the voice instruction of "unfold the retractable screen at a medium speed", key feature information such as "medium speed", "unfold", and "retractable screen" are detected, and it may be determined that the voice instruction is intended to control the unfolding of the retractable screen, which belongs to the control intent.

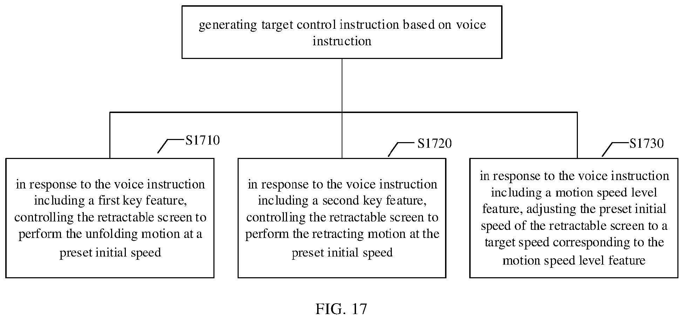

In some embodiments, referring to FIG. 17, the voice instruction may be converted into the target control instruction, which may be implemented by the following.

At block S1710: in response to the voice instruction including a first key feature, controlling the retractable screen to perform the unfolding motion at a preset initial speed.

At block S1720: in response to the voice instruction including a second key feature, controlling the retractable screen to perform the retracting motion at the preset initial speed.

At block S1730: in response to the voice instruction including a motion speed level feature, adjusting the preset initial speed of the retractable screen to a target speed corresponding to the motion speed level feature.

The first key feature refers to feature information for controlling the retractable screen to perform the unfolding motion. For example, the first key feature may be a combination of key information such as "unfold", "turn on", "open", etc. and key information such as "screen", "retractable screen", "curled screen", etc. When the first key feature is detected in the voice instruction, it may be considered that the user expects the retractable screen to be unfolded. When the current retractable screen has already been unfolded to the maximum extent, it may be determined that the current voice instruction is invalid.

The second key feature refers to feature information for controlling the retracting motion of the retractable screen. For example, the second key feature may be a combination of key information such as "close", "retract", "curl", etc. and key information such as "screen", "retractable screen", "curled screen", etc. When the second key feature is detected in the voice instruction, it may be considered that the user expects to retract the retractable screen. When the retractable screen has already been retracted to the maximum extent, it may be determined that the current voice instruction is invalid.

The motion speed level feature refers to preset data for controlling the motion speed of the retractable screen. For example, the preset motion speed level feature may be "low speed", "medium speed", "high speed", or "first level", "second level", or "third level". The settings can be customized according to actual situations, and the embodiments do not make any special limitations in this regard. When the motion speed level feature is detected in the voice instruction, it may be considered that the user expects to set the motion speed of the retractable screen, and the motion speed of the retractable screen may be determined through a mapping relationship between the motion speed level feature and the preset motion speed.

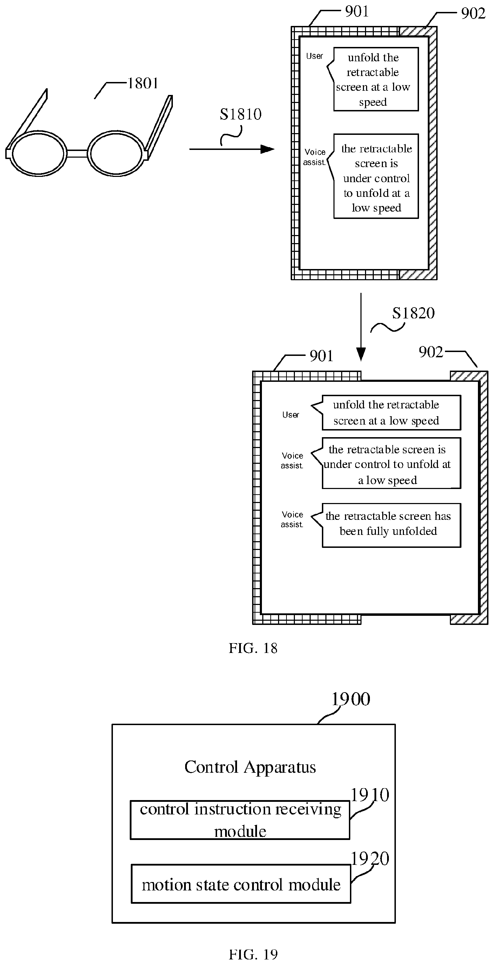

FIG. 18 is a flowchart of realizing motion control of a retractable screen through a voice instruction according to an embodiment of the present disclosure.

Referring to FIG. 18, the electronic device may include a fixed end 901, a movable end 902, and a retractable screen 903, which may be communicatively connected to a wearable device 1801 for real-time data transfer.

In step S1810: the electronic device may obtain a voice instruction input by the user through the wearable device 1801, and classify the voice instruction in terms of intent; when an intent type of the voice instruction is detected to be a control intent of the retractable screen, the electronic device may extract key feature information in the voice instruction.

In step S1820: when a first key feature is included in the voice instruction, the retractable screen is controlled to perform the unfolding motion at a preset initial speed; when a second key feature is included in the voice instruction, the retractable screen is controlled to perform the retracting motion at the preset initial speed; and when a motion speed level feature is included in the voice instruction, the preset initial speed of the retractable screen is adjusted to a target speed corresponding to the motion speed level feature. For example, when the voice instruction input by the user through the wearable device 1801 is "unfold the retractable screen at a low speed", the first key feature of "unfold" is detected, and the motion speed level feature of "low speed" is detected. Assuming that the motion speed corresponding to the "low speed" is determined to be 20 mm/s according to the preset motion speed mapping relationship, the retractable screen may be controlled to unfold at a motion speed of 20 mm/s.

In summary, in the embodiments, the user inputs the target control instruction, and controls the real-time motion state of the retractable screen according to the target control instruction, thereby flexibly controlling the operation state of the retractable screen according to the target control instruction input by the user, such as controllably adjusting the unfolding or retracting speed of the retractable screen and stopping the retractable screen's motion at any time. In this way, a visible size adjustment of the retractable screen may be realized, enabling the user to flexibly control the unfolding or retraction of the retractable screen, improving the flexibility of the control of the retractable screen, and improving the interactivity between the user and the retractable screen, thereby improving the user experience.

It should be noted that the above accompanying drawings are only schematic illustrations of the processing included in the method according to the embodiments of the present disclosure, and are not intended to be limiting. It is readily understood that the processing shown in the above accompanying drawings does not indicate or limit the chronological order of these processes. It is also readily understood that the process may be performed, for example, synchronously or asynchronously in multiple modules.

Further, referring to FIG. 19, embodiments of the present disclosure further provide a control apparatus 1900 that may include a control instruction receiving module 1910 and a motion state control module 1920. The control instruction receiving module 1910 may be configured to receive a target control instruction; and the motion state control module 1920 may be configured to control a real-time motion state of the retractable screen according to the target control instruction.

In some embodiments, the control instruction receiving module 1910 may include: a touch event monitoring unit configured to monitor a touch event through a touch apparatus; a first instruction generating unit configured to generate the target control instruction according to the touch event.

In some embodiments, the first instruction generating unit may include: a motion instruction generation subunit configured to, in response to the touch event being a click contact event, generate a motion instruction; where the motion instruction is configured to control the retractable screen to perform a motion at a preset initial speed, the motion including an unfolding motion or a retracting motion; a stop instruction generation subunit configured to, in response to the touch event being a click away event, generate a stop instruction; where the stop instruction is configured to control the retractable screen in the motion to stop the motion; a motion attribute control instruction generating subunit configured to, in response to the touch event being a sliding event, generate a motion attribute control instruction; where the motion attribute control instruction is configured to control a motion attribute of the retractable screen in the motion, the motion attribute including a motion direction and a motion speed.

In some embodiments, the motion attribute control instruction generating subunit may further be configured to, in response to the touch event being a sliding event, obtain an initial position of the sliding event; obtain a current position of the sliding event in real time, and calculate and obtain a sliding direction and a sliding speed of the sliding event based on the initial position and the current position; generate the motion attribute control instruction according to the sliding direction and the sliding speed.

In some embodiments, the motion attribute control instruction generating subunit may further be configured to, in response to the sliding event stopping sliding and not ending, generate a uniform-speed motion instruction; where the uniform-speed motion instruction is configured to control the retractable screen in the motion to move at a uniform speed at a current speed.

In some embodiments, the control instruction receiving module 1910 may include: a tilt event monitoring unit configured to monitor a tilt event through an angular motion detection apparatus; and a second instruction generating unit configured to generate the target control instruction according to the tilt event.

In some embodiments, the second instruction generating unit may include: an unfolding instruction generating subunit configured to, in response to the tilt event being that the fixed end is higher than the movable end and a tilt angle is greater than or equal to a preset tilt angle, generate an unfolding instruction; where the unfolding instruction is configured to control the retractable screen to perform the unfolding motion; a retracting instruction generating subunit configured to, in response to the tilt event being that the fixed end is lower than the movable end and the tilt angle is greater than or equal to the preset tilt angle, generate a retracting instruction; where the retracting instruction is configured to control the retractable screen to perform the retracting motion.

In some embodiments, the second instruction generating unit may further be configured to: obtain a current tilt angle of the tilt event in real time in response to detecting the unfolding instruction or the retracting instruction; calculating a tilt speed of the tilt event through a difference between the current tilt angle and the preset tilt angle; and controlling the motion speed of the unfolding motion or the retracting motion of the retractable screen corresponding to and according to the tilt speed.

In some embodiments, the control instruction receiving module 1910 may include: a touch region providing unit configured to provide a touch region at a preset position of the visible region; and a third instruction generating unit configured to generate the target control instruction according to a touch operation acted on the touch region.

In some embodiments, the third instruction generating unit further includes: an operation control subunit configured to, in response to the touch operation dragging the slider to generate a displacement on the slide rail, generate a motion attribute control instruction according to a displacement attribute of the slider; where the motion attribute control instruction is configured to control the motion attribute of the retractable screen, and the motion attribute may include the motion direction and the motion speed.

In some embodiments, the operation control subunit may be configured to, in response to the touch operation dragging the slider to generate a displacement on the slide rail, obtain a displacement speed and a displacement direction of the slider; and generate the motion attribute control instruction according to the displacement speed and the displacement direction.

In some embodiments, the operation control subunit may further be configured to, in response to the touch operation dragging the slider to generate a displacement on the slide rail, determine a current position of the slider on the slide rail; determine unfolding scale data of the visible region according to the current position; and generate the motion attribute control instruction through the unfolding scale data.

In some embodiments, the control instruction receiving module 1910 may include: a voice instruction monitoring unit configured to monitor a voice instruction sent by a communication-connected wearable device; and a fourth instruction generating unit configured to generate the target control instruction based on the voice instruction in response to detecting that the voice instruction contains a control intent of the retractable screen.

In some embodiments, the motion state control module 1920 may further be configured to, in response to the voice instruction including a first key feature, control the retractable screen to perform the unfolding motion at a preset initial speed; in response to the voice instruction including a second key feature, control the retractable screen to perform the retracting motion at the preset initial speed; and, in response to the voice instruction including a motion speed level feature, adjust the preset initial speed of the retractable screen to a target speed corresponding to the motion speed level feature.

The specific details of each module in the above apparatus have been described in detail in the method implementation, and the contents of the undisclosed details can be found in the contents of the method implementation, which will not be repeated herein.

Those skilled in the art can understand that aspects of the present disclosure can be realized as a system, a method, or a program product. Accordingly, aspects of the present disclosure may be specifically realized in the form of a complete hardware implementation, a complete software implementation (including firmware, microcode, etc.), or a combination of hardware and software aspects, which may be collectively referred to herein as a "circuit" "module" or "system".

Embodiments of the present disclosure further provide a computer-readable storage medium storing a program product capable of implementing the methods described above in this specification. In some embodiments, aspects of the present disclosure may also be implemented in the form of a program product including program code that, when the program product is run on a terminal device, is configured to cause the terminal device to perform the steps described in the above method implementation of the present disclosure in accordance with various embodiments, for example, to perform any one or more steps in FIGS. 6 to 18.

It is noted that the computer-readable medium in the present disclosure may be a computer-readable signal medium or a computer-readable storage medium or any combination thereof. The computer-readable storage medium may be, but not limited to, a system, device, or apparatus or component that is electrical, magnetic, optical, electromagnetic, infrared, or semiconducting, or any combination of the above. More specific examples of the computer-readable storage medium may include, but are not limited to: electrical connection having one or more wires, portable computer disk, hard disk, random access memory (RAM), read-only memory (ROM), erasable programmable read-only memory (EPROM or flash memory), optical fiber, portable compact disk read-only memory (CD-ROM), optical storage device, magnetic memory device, or any suitable combination of the above.

In the present disclosure, the computer-readable storage medium may be any tangible medium containing or storing a program that may be used by or used in combination with an instruction execution system, apparatus, or component. In the present disclosure, he computer-readable signal medium may include a data signal propagated in a baseband or as part of a carrier that carries computer-readable program code. Such propagated data signals may take a variety of forms, including, but not limited to, electromagnetic signals, optical signals, or any suitable combination of the foregoing. The computer-readable signal medium may also be any computer-readable medium other than the computer-readable storage medium that sends, disseminates, or transmits a program for use by, or in combination with, an instruction-executing system, apparatus, or component. The program code contained in the computer-readable medium may be transmitted in any suitable medium, including, but not limited to: wireless, wire, fiber optic cable, RF, etc., or any suitable combination of the foregoing.

In addition, the program code for performing the operations of the present disclosure may be written in any combination of one or more programming languages, including object-oriented programming languages, such as Java, C++, etc., and also conventional procedural programming languages, such as "C" language or the like. The program code may be executed entirely on the user computing device, partially on the user device, as a stand-alone software package, partially on the user computing device and partially on a remote computing device, or entirely on the remote computing device or server. In situations involving the remote computing device, the remote computing device may be connected to the user computing device through any kind of network, including a local region network (LAN) or a wide region network (WAN), alternatively, may be connected to an external computing device (e.g., through the Internet by an Internet Service Provider).

Other embodiments of the present disclosure will readily come to mind to those skilled in the art upon consideration of the specification and practice of the invention disclosed herein. The present disclosure is intended to cover any variations, uses, or adaptations of the present disclosure that follow the general principles of the present disclosure and include common knowledge or customary technical means in the art not disclosed herein. The specification and embodiments are to be regarded as exemplary only, and the true scope and spirit of the present disclosure is indicated by the claims.

It should be understood that the present disclosure is not limited to the precise structure which has been described above and illustrated in the accompanying drawings, and that various modifications and alterations may be made without departing from its scope. The scope of the present disclosure is limited only by the appended claims.

## Claims

1. A control method, performed by an electronic device arranged with a retractable screen, and **characterized by** comprising:
receiving a target control instruction; and
controlling a real-time motion state of the retractable screen according to the target control instruction.

2. The method according to claim 1, wherein the electronic device comprises a touch apparatus; the receiving a target control instruction comprises:
monitoring a touch event through the touch apparatus; and
generating the target control instruction according to the touch event.

3. The method according to claim 2, wherein the generating the target control instruction according to the touch event comprises:
generating a motion instruction in response to the touch event being a click contact event; wherein the motion instruction is configured to control the retractable screen to perform a motion at a preset initial speed, the motion comprising an unfolding motion or a retracting motion;
generating a stop instruction in response to the touch event being a click away event; wherein the stop instruction is configured to control the retractable screen in the motion to stop the motion; and
generating a motion attribute control instruction in response to the touch event being a sliding event;
wherein the motion attribute control instruction is configured to control a motion attribute of the retractable screen in the motion, the motion attribute comprising a motion direction and a motion speed.

4. The method according to claim 3, wherein generating a motion attribute control instruction in response to the touch event being a sliding event comprises:
obtaining an initial position of the sliding event in response to the touch event being the sliding event;
obtaining a current position of the sliding event in real time, and calculating and obtaining a sliding direction and a sliding speed of the sliding event based on the initial position and the current position; and
generating the motion attribute control instruction according to the sliding direction and the sliding speed.

5. The method according to claim 4, wherein generating a motion attribute control instruction in response to the touch event being a sliding event further comprises:
generating a uniform-speed motion instruction in response to the sliding event stopping sliding and not ending; wherein the uniform-speed motion instruction is configured to control the retractable screen in the motion to move at a uniform speed at a current speed.

6. The method according to any one of claims 1-5, wherein the electronic device comprises a first housing and a second housing; the touch apparatus is disposed on a side of the first housing and/or the second housing away from the retractable screen, or disposed on a side edge of the first housing and/or the second housing.

7. The method according to claim 6, wherein the electronic device further comprises a transmission member configured to control the retractable screen to move; the unfolding motion refers to a motion process in which the transmission member drives a portion of the retractable screen that is in a holding space of the first housing to move out of the holding space; the retracting motion refers to a motion process in which the transmission member drives a portion of the retractable screen that is outside the holding space of the first housing to move into the holding space.

8. The method according to claim 1, wherein the electronic device comprises an angular motion detection apparatus; the receiving a target control instruction comprises:
monitoring a tilt event through the angular motion detection apparatus; and
generating the target control instruction according to the tilt event.

9. The method according to claim 8, wherein the electronic device further comprises a fixed end and a movable end; the generating the target control instruction according to the tilt event comprises:
generating an unfolding instruction in response to the tilt event being that the fixed end is higher than the movable end and a tilt angle is greater than or equal to a preset tilt angle; wherein the unfolding instruction is configured to control the retractable screen to perform an unfolding motion; and
generating a retracting instruction in response to the tilt event being that the fixed end is lower than the movable end and the tilt angle is greater than or equal to the preset tilt angle; wherein the retracting instruction is configured to control the retractable screen to perform a retracting motion.

10. The method according to claim 9, further comprising:
obtaining a current tilt angle of the tilt event in real time in response to detecting the unfolding instruction or the retracting instruction;
calculating and obtaining a tilt speed of the tilt event through a difference between the current tilt angle and the preset tilt angle; and
controlling a motion speed of the unfolding motion or the retracting motion of the retractable screen corresponding to and according to the tilt speed.

11. The method according to claim 1, wherein the electronic device comprises a visible region; the receiving a target control instruction comprises:
providing a touch region at a preset position of the visible region; and
generating the target control instruction according to a touch operation acted on the touch region.

12. The method according claim 11, wherein the touch region comprises a slide rail and a slider on the slide rail; the controlling a real-time motion state of the retractable screen according to the target control instruction comprises:
generating a motion attribute control instruction according to a displacement attribute of the slider in response to the touch operation being dragging the slider to generate a displacement on the slide rail; wherein the motion attribute control instruction is configured to control a motion attribute of the retractable screen, and the motion attribute comprises a motion direction and a motion speed.

13. The method according claim 12, wherein the generating a motion attribute control instruction according to a displacement attribute of the slider in response to the touch operation being dragging the slider to generate a displacement on the slide rail comprises:
obtaining a displacement speed and a displacement direction of the slider in response to the touch operation being dragging the slider to generate the displacement on the slide rail; and
generating the motion attribute control instruction according to the displacement speed and the displacement direction.

14. The method according claim 12, wherein the generating a motion attribute control instruction according to a displacement attribute of the slider in response to the touch operation being dragging the slider to generate a displacement on the slide rail comprises:
determining a current position of the slider on the slide rail in response to the touch operation being dragging the slider to generate the displacement on the slide rail;
determining unfolding scale data of the visible region according to the current position; and
generating the motion attribute control instruction through the unfolding scale data.

15. The method according to claim 1, wherein the receiving a target control instruction comprises:
monitoring a voice instruction sent by a communication-connected wearable device; and
generating the target control instruction based on the voice instruction in response to detecting that the voice instruction contains a control intent of the retractable screen.

16. The method according to claim 15, wherein controlling a real-time motion state of the retractable screen according to the target control instruction comprises:
controlling the retractable screen to perform an unfolding motion at a preset initial speed in response to the voice instruction comprising a first key feature;
controlling the retractable screen to perform a retracting motion at the preset initial speed in response to the voice instruction comprising a second key feature; and
in response to the voice instruction comprising a motion speed level feature, adjusting the preset initial speed of the retractable screen to a target speed corresponding to the motion speed level feature.

17. The method according to claim 16, further comprising:
determining the voice instruction to be invalid in response to detecting that the retractable screen is unfolded or retracted to a maximum extent.

18. A control apparatus, configured for an electronic device arranged with a retractable screen, and **characterized by** comprising:
a control instruction receiving module, configured to receive a target control instruction; and
a motion state control module, configured to control a real-time motion state of the retractable screen according to the target control instruction.

19. A computer-readable storage medium, storing a computer program; wherein when the computer program is executed by a processor, the processor is caused to perform the method according to any one of claims 1-17.

20. An electronic device, comprising:
a processor; and
a memory, configured to store an executable instruction of the processor;
wherein the processor is configured to perform the method according to any one of claims 1-17 by executing the executable instruction.
